# EUROPÄISCHE PATENTSCHRIFT

(11) **EP 1 422 122 B1**
(45) Veröffentlichungstag und Bekanntmachung des Hinweises auf die Patenterteilung: **12.12.2007**
(21) Anmeldenummer: 03025876.8
(22) Anmeldetag: 12.11.2003
(51) Int. Cl.: B62B 5/06, B62B 5/04, B62B 3/06, G05G 11/00

(54) **Deichsel für Handgabelhubwagen**
Towbar for hand pallet truck
Timons pour transpalette à fourche à bras

(30) Priorität: 20.11.2002 DE 10254031
(43) Veröffentlichungstag der Anmeldung: 26.05.2004
(73) Patentinhaber: Jungheinrich Aktiengesellschaft, 22047 Hamburg (DE)
(72) Erfinder: von Werder, Martin, 22949 Ammersbek (DE)
(74) Vertreter: Hauck Patent- und Rechtsanwälte

(56) Entgegenhaltungen:
- EP-A- 1 186 511
- DE-A1- 2 856 613
- DE-B- 1 092 786
- DE-U1- 7 818 894
- DE-U1- 9 218 681
- DE-U1- 29 710 503
- FR-A- 2 362 074

## Beschreibung

Die Erfindung bezieht sich auf eine Deichsel für einen Handgabelhubwagen nach dem Oberbegriff des Patentanspruchs 1.

Bei derzeit gebräuchlichen Handgabelhubwagen wird die Deichsel zum Lenken und Bewegen des Fahrzeugs sowie zum Pumpen für das Heben der Last benutzt. Zur Bedienung des Hubwerks, insbesondere zum Absenken, ist ein Bedienungselement notwendig, das gut zugänglich sein soll und die Umschaltung zwischen den Funktionen Heben und Fahren ermöglicht und ein feinfühliges Senken der Last erlaubt.

Eine gute Erreichbarkeit des Bedienelements ist für ein effektives Arbeiten mit dem Handgabelhubwagen besonders wichtig, wenn das Fahrzeug gezogen wird, d.h. die Deichsel sich in geneigter Stellung vor dem Fahrzeug befindet. Das Betätigen der Funktionen bei aufrecht stehender Deichsel, z.B. wenn das Fahrzeug geschoben wird, ist dagegen weniger wichtig, da das Fahrzeug in den meisten Fällen aus der Palette herausgezogen und dafür die Deichsel wieder in die geneigte Stellung gebracht wird.

Für das Pumpen und das Bewegen des Fahrzeugs ist es vorteilhaft, wenn der Deichselgriff mittig greifbar ist, um unnötige Lenk- und Reibungskräfte zu vermeiden. Dabei sollen die Betätigungskräfte am Bedienelement in allen Situationen möglichst klein sein, wofür ein größerer Betätigungsweg notwendig ist, z.B. mit einem großen Abstand des Kreispunktes vom Hebeldrehpunkt vorhanden sein sollte.

Es ist bekannt, eine einen Griff durchsetzende Verlängerung der Deichselstange als Lagerbauteil für einen seitlich erstreckten Betätigungshebel zu verwenden. Nachteilig bei dem bekannten Deichselgriff ist, dass er nicht mittig erfasst werden kann.

Aus DE 297 10 503 U1 ist ferner bekannt, am oberen Ende des Stangenabschnitts, der sich in den Griff hineinerstreckt, einen Steuerhebel schwenkbar zu lagern. Der Hebel muss vom Bediener fortgedrückt werden, um ein Absenken der Last zu bewerkstelligen. Ein Ziehen des Hebels zum Bediener hin schaltet die Hebenfunktion ein. Nachteilig ist bei dieser Konstruktion, dass der Bediener die Funktionen nicht gut betätigen kann, wenn er das Fahrzeug zieht, da der Steuerhebel nach oben gezogen werden muss, um ein Absenken zu bewirken. Zudem ist das Bedienelement für eine intuitive Bedienung weniger geeignet, da das Bedienelement nicht von anderen technischen Geräten her vertraut ist. Die Bedienkräfte sind groß aufgrund des geringen Abstands des Kreispunkts vom Hebeldrehpunkt.

Neben der beschriebenen Bedienungsmöglichkeit eines Handgabelhubwagens ist auch gebräuchlich, diesen mit integrierter Handbremse zu versehen. In diesem Zusammenhang ist aus der EP 1 186 511 A2, welche alle Merkmalen des Oberbegriffs der unabhängigen Ansprüche 1 und 14 enthält, bekannt geworden, an einem den Griff der Deichsel in Verlängerung der Deichsel durchsetzenden Halteansatz auf jeder Seite einen Bedienhebel schwenkbar zu lagern. Der eine Bedienhebel ist mit einem Zug- oder Druckelement für die Hubvorrichtung und der andere mit einem Druckoder Zugelement für eine Bremse verbunden. Die Betätigung der Hubvorrichtung erfolgt in der Weise, dass bei einem Ziehen des Bedienhebels ein Senkvorgang in der Hubvorrichtung eingeleitet wird, während umgekehrt ein Druck die Möglichkeit eröffnet, durch ein Pumpen an der Deichsel einen Hubvorgang zu bewirken. Ein Ziehen am anderen Bedienhebel führt zu einem Bremsen des Fahrzeugs, wobei das Ausmaß der Schwenkbewegung die Bremskraft bestimmt. In der bekannten Anordnung ist ferner ein Sperr- bzw. Entsperrhebel vorgesehen, der ebenfalls schwenkbar im Halteansatz gelagert ist und einen Vorsprung aufweist, der mit einer Ausnehmung des Bremsbedienhebels zusammenwirkt, wenn dieser eine vorgegebene hintere Position erreicht hat. Hierdurch ist eine Parkbremse geschaffen, die dadurch gelöst wird, dass der Sperr- und Entsperrhebel in die entgegengesetzte Richtung verschwenkt wird. Dadurch kann der Bremsbedienhebel durch Federvorspannung von der Bremse her in seine Ausgangsposition zurückverschwenken. Schließlich ist bei der bekannten Anordnung auch vorgesehen, die Parkbremse dadurch zu lösen, dass der andere Bedienhebel betätigt wird. Mit anderen Worten, bei Betätigung des Senkvorgangs wird automatisch die Parkbremse gelöst.

Bei den beschriebenen Handgabelhubwagen ist eine Bremse üblicherweise optional. Je nachdem, ob eine Bremse vorhanden ist oder nicht, sind verschiedene Griffanordnungen vorzusehen, was den Herstellungsaufwand erhöht.

Der Erfindung liegt daher die Aufgabe zugrunde, bei einer Deichsel für einen Handgabelhubwagen den Deichselkopf so auszubilden, dass er wahlweise eine Bremsbetätigung aufzunehmen in der Lage ist. Bei Wegfall einer Bremse soll eine besonders ergonomische Betätigung für die Hubvorrichtung möglich sein.

Diese Aufgabe wird durch die Merkmale des Patentanspruchs 1 gelöst.

Bei der Erfindung ist das Innere des Gehäuses für die Bedienvorrichtung identisch aufgebaut unabhängig davon, ob die Betätigung einer integrierten Bremse vorgesehen wird. Zu diesem Zweck sind im Gehäuse zwei identische Lagerstellen vorgesehen, an denen jeweils ein Bedienhebel schwenkbar gelagert werden kann. Ist eine Bremse integriert, ist der eine Bedienhebel ein Bremsbedienhebel, während der andere die Hubvorrichtung betätigt. Kommt die Bremse in Fortfall, ist für den Betrieb generell nur ein Bedienhebel erforderlich. Es ist jedoch ein Kopplungsmechanismus im Inneren des Gehäuses vorgesehen, der die Anordnung eines identischen Bedienhebels auf der anderen Seite für die Betätigung der Hubvorrichtung ermöglicht. Es ist daher möglich, durch Betätigen eines der beiden Bedienhebel und auch beider Bedienhebel gleichzeitig die Hubvorrichtung entsprechend anzusteuern, wobei eine Bewegung in der einen Richtung den Senkvorgang einleitet und in der anderen Richtung den Hubvorgang initiiert. Ergonomisch sinnfällig führt ein Ziehen des Bedieners an dem einen oder anderen oder beiden Bedienhebeln zur Initiierung des Senkvorgangs.

Bei der erfindungsgemäßen Deichsel lässt sich mithin unabhängig davon, ob eine Bremse betätigt werden muss oder nicht, ein gleich und einfach aufgebauter Deichselkopf mit Bedienvorrichtung herstellen.

Die Erfindung stellt auch eine besonders einfach und wirksam aufgebaute Betätigung des Zug- oder Druckelements für die Bremse bereit. Zu diesem Zweck ist im Gehäuse ein Sperrabschnitt mit einer Zahnung angeordnet, und am Bremshebel ist eine Sperrklinke beweglich gelagert, die mit der Zahnung in Eingriff gelangt, wobei der Bremshebel in verschiedenen Schwenkpositionen verriegelbar ist. Ein Sperrund Entsperrhebel, der ebenfalls innerhalb des Gehäuses der Bedienvorrichtung gelagert ist, betätigt die Sperrklinke, um sie mit der Zahnung außer Eingriff zu bringen. Die Klinke und/oder der Sperr- und Entsperrhebel ist von einer Feder vorgespannt. Vorteilhaft bei dieser erfindungsgemäßen Lösung ist, dass der Bremshebel über den gesamten Betätigungsweg in mehreren definierten Positionen bis zur Endposition bei maximaler Bremswirkung selbstarretierend ist, d.h. ein Loslassen des Bremshebels in einer bestimmten Position dazu führt, dass die Bremskraft aufrechterhalten wird. Dadurch, dass alle betätigbaren Bauteile außer den Betätigungsabschnitten der Bedienhebel innerhalb des Gehäuses angeordnet sind, ergibt sich unter Design-Gesichtspunkten eine optisch ansprechende Gestaltung. Außerdem ist dadurch die Gefahr verringert, dass die Teile beschädigt und dadurch funktionsunfähig werden.

Der Betätigungsabschnitt der drei möglichen Bedienhebel kann von der Form gleich oder unterschiedlich ausgebildet sein. Es ist jedoch vorteilhaft, wenn gemäß einer Ausgestaltung der Erfindung das Material, die Farbe oder die Beschaffenheit der Oberfläche des Betätigungsabschnitts für den Bremshebel von den vergleichbaren Eigenschaften der anderen Bedienhebel abweicht, damit der Bediener auf den ersten Blick erkennt, welcher Hebel für das Bremsen und welcher für die Betätigung der Hubvorrichtung gedacht ist. Auch bei unterschiedlicher Form des Betätigungsabschnitts lässt sich eine entsprechende Anzeige erhalten.

Die innen liegenden Abschnitte der Hebel überkreuzen sich vorzugsweise, sodass der Lagerpunkt für einen Bedienhebel auf der gegenüberliegenden Seite der Achse angeordnet ist, welche sich in Verlängerung der Deichsel durch das Gehäuse erstreckt. Auf diese Weise kann eine große Hebelwirkung erzielt, d.h. mit geringem Kraftaufwand eine relativ große Betätigungskraft erzielt werden.

Vorteilhafte Weiterbildungen der Erfindung sind in den Unteransprüchen angegeben.

Die Erfindung wird nachfolgend anhand von Zeichnungen näher erläutert.
- Fig. 1: zeigt eine Draufsicht auf den Kopf einer Deichsel eines Handgabelhubwagens mit einer Bedienvorrichtung nach der Erfindung.
- Fig. 2: zeigt einen Schnitt durch die Anordnung nach Fig. 1 entlang der Linie 2-2.
- Fig. 3: zeigt die Draufsicht auf einen Teil des Deichselkopfes nach Fig. 1 bei abgenommener oberer Schale des Gehäuses der Bedienvorrichtung.
- Fig. 4: zeigt perspektivisch eine ähnliche Ansicht wie Fig. 3, jedoch mit einem Bremsbedienhebel.
- Fig. 5: zeigt den Bremsbedienhebel nach Fig. 4 einschließlich eines Sperrabschnitts.
- Fig. 6: zeigt die Druntersicht unter den Bremsbedienhebel nach Fig. 5 und den Sperrabschnitt.

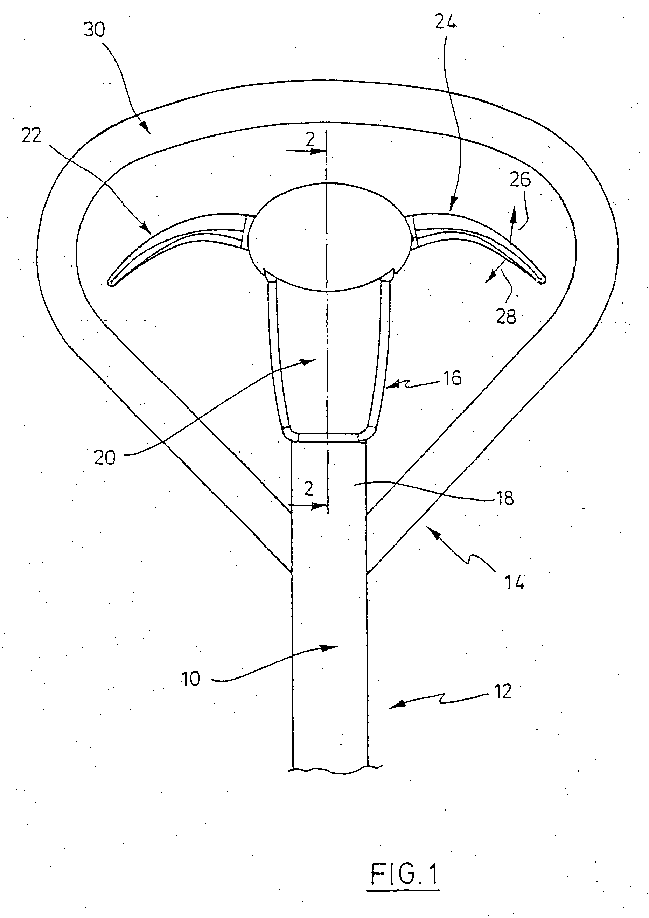

In Fig. 1 ist eine Stange 10 einer allgemein mit 12 bezeichneten Deichsel zu erkennen. Die Deichsel ist nur mit dem Abschnitt 10 sowie einem schleifenförmigen Griff 14 dargestellt. Die Deichselstange 10 ist am anderen Ende mit dem Lagerbock eines gelenkten Rades eines nicht gezeigten Handgabelhubwagens verbunden bzw. an diesen angelenkt, damit der Handgabelhubwagen entsprechend manipuliert werden kann. Der Handgabelhubwagen enthält wie üblich eine Pumpe zum Anheben des Lasthebemittels sowie eine Ventilanordnung zum Absenken des Lasttragmittels.

Der Griff 14 wird wie üblich von einem entsprechend gebogenen Rohr gebildet, das eine Ebene aufspannt, durch welche auch die Achse der Stange 10 sich erstreckt. Die Stange 10 setzt sich in das Innere des Griffes 14 fort, wodurch ein Halteansatz 16 gebildet ist. Dieser setzt sich zusammen aus einem Rohrabschnitt 18 und einem Gehäuse 20, das auf den Rohrabschnitt 18 aufgesteckt und darauf befestigt ist. Einzelheiten hierzu werden nachfolgend noch beschrieben.

Im Gehäuse sind zwei Bedienhebel 22, 24 angelenkt zur Betätigung der Hub- und Senkfunktion des nicht gezeigten Handgabelhubwagens. Einzelheiten dieser Hebel 22, 24 sowie deren Lagerung gehen aus den weiteren Figuren hervor.

Wie sich aus den Pfeilen 26, 28 ergibt, können die Hebel zu beiden Richtungen in einer Ebene geschwenkt werden, welche im Wesentlichen mit der Ebene des Griffes 14 zusammenfällt oder parallel dazu verläuft. Man erkennt außerdem, dass das Gehäuse 20 bzw. der Ansatz 16 vom hinteren Abschnitt 30 des Griffes 14 einen Abstand hat, sodasss der hintere Abschnitt des Griffes 14 in jeder Lage von Hand erfasst werden kann.

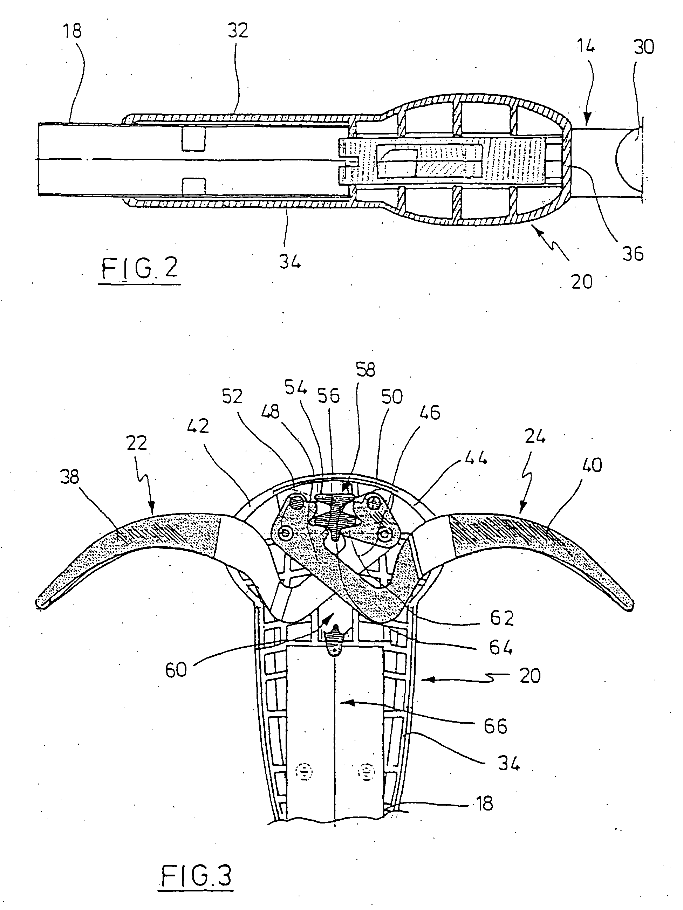

Wie aus Fig. 2 hervorgeht, besteht das Gehäuse 20 aus einer oberen Schale 32 und einer unteren Schale 34, deren Trennebene 36 in der Mittenebene des Griffes 14 verläuft. Im linken Bereich bildet das Gehäuse 20 einen Muffenabschnitt, in welchen der Rohrabschnitt 18 eingesteckt ist, um das Gehäuse 20 zu befestigen.

Wie aus Fig. 3 und auch in den folgenden Figuren zu erkennen, sind die gleich geformten Bedienhebel 22, 24 schwach S-förmig. Die bogenförmigen Betätigungsabschnitte 38, 40 der Bedienhebel 22, 24 erstrecken sich durch seitliche Schlitze 42, 44 des Gehäuses 20 nach außen. Die Biegung der Abschnitte 38, 40 ist derart, dass die konvexe Seite dem Bediener und die konkave der Deichselstange zugekehrt ist, wie sich auch ohne weiteres aus den Zeichnungen ergibt. Ein innerer gegensinnig gebogener Abschnitt 46, 48 der Bedienhebel 22, 24 ist über einen Schwenkpunkt 50 bzw. 52 im Gehäuse 20 schwenkbar gelagert. Die Lagerung erfolgt z.B. mit Hilfe eines Lagerstiftes, welcher sich durch ein Loch des Abschnitts 46, 48 hindurcherstreckt. Das Loch ist nahezu am Ende des Abschnitts 46, 48 angebracht.

Die Bedienhebel 22, 24, die in Fig. 3 in ihrer neutralen Position dargestellt sind, können sowohl in Fig. 3 nach oben als auch nach unten verschwenkt werden. Eine Begrenzung der Verschwenkung ist vorgesehen, aber nicht im Einzelnen dargestellt.

Wie ferner aus Fig. 3 und den weiteren Figuren hervorgeht, weist jeder Hebelabschnitt 46, 48 einen gezahnten Abschnitt mit zwei Zähnen 54, 56 auf; es können natürlich auch mehr sein. Der gezahnte Abschnitt beider Hebelabschnitte 46, 48 wirkt zusammen mit einem Zahnstangenabschnitt 58, der an einem Verstellelement 60 angebracht ist, das in der Achse der Stange 10 im Gehäuse 20 linear bewegbar gelagert ist. Eine seitliche Führung der Zahnstange erfolgt über Vorsprünge im Gehäuse. Der Zahnstangenabschnitt 48 weist auf gegenüberliegenden Seiten jeweils zwei Zähne 62, 64 auf, die mit den zugeordneten Zähnen 54, 56 der Hebelabschnitte 46, 48 zusammenwirken.

Mit dem entgegengesetzten Ende des Verstellelements 60 ist ein Zugseil 66 verbunden, das mit entsprechenden Steuerorganen im Handgabelhubwagen verbunden ist.

Anhand von Fig. 3 soll die Funktion des gezeigten Hebelmechanismus zur Betätigung des Seilzugs 66 erläutert werden.

Wird ein Hebel etwa nach Fig. 1 in Richtung Pfeil nach 26 verschwenkt, d.h. zum Bediener bzw. Griffabschnitt 30 hin, wird der Zahnstangenabschnitt 58 durch den Zahn 56 in Richtung Bediener verstellt. Dadurch wird auf das Seil 66 eine Zugbewegung ausgeübt, wobei der Verstellweg in Fig. 1 durch den Abstand d zwischen der gestrichelten und der ausgezogenen. Linie angedeutet ist. Die gestrichelte Linie bedeutet die neutrale Position, wie sie in Fig. 3 dargestellt ist. Wie zu erkennen, wird die gleiche Funktion erhalten, wenn beide Hebel 22, 24 gezogen werden. Wird ein Hebel weiter gezogen als der andere, dann ist der Verstellweg des am weitesten gezogenen Hebels ausschlaggebend. Das Ausmaß der Auslenkung des Zugelements 66 bestimmt die Absenkgeschwindigkeit des Lasttragmittels des nicht gezeigten Handgabelhubwagens.

Wird der gezogene Hebel losgelassen, kehrt er durch eine geeignete Rückstellvorrichtung in die Neutralposition nach Fig. 3 zurück. Hierfür können an geeignetem Ort Federmittel vorgesehen werden. Es ist auch denkbar, die Hebel 22, 24 in der Neutralstellung leicht zu verrasten, um bei einer geringen Berührung die Auslösung einer Funktion zu vermeiden.

Beim Verschwenken des Hebels 24 zwecks Auslösung einer Senkfunktion verbleibt der Hebel 22 in seiner Neutralstellung. Die Bedienhebel 22, 24 sind im Hinblick auf die Senkfunktion unabhängig voneinander.

Wird ein Hebel 22 oder 24 gedrückt, d.h. von der Bedienungsperson fort verschwenkt, wird dadurch das Verstellelement 60 in die gleiche Richtung bewegt. Dadurch wird die Hubfunktion initiiert. Der "Hub" des Seils 66 relativ zur neutralen Position ist mit d' bezeichnet. Nunmehr kann durch "Pumpen" mit der Deichselstange 10 das Heben des Lasttragmittels bewerkstelligt werden.

Der Eingriff der Zähne 54, 56 in der Zahnung des Zahnstangenabschnitts 58 ist derart, dass eine durch die Betätigung eines Hebels verursachte Verstellung des Zahnstangenabschnitts 58 zugleich eine Verschwenkung des anderen Hebels herbeiführt. Die Betätigung eines Bedienhebels 22, 24 in Richtung vom Bediener fort führt daher zu einer synchronen Verstellung beider Hebel. Mithin können auch beide Hebel naturgemäß betätigt werden. Aufgrund dieser synchronen Verstellung kann der Fahrer erkennen, in welcher Betriebsstellung die Bedienvorrichtung ist.

Es ist auch denkbar, dass an einem Bedienhebel gezogen und am anderen gedrückt wird. Aus den Zeichnungen ergibt sich, dass dann diejenige Funktion zum Tragen kommt, auf deren Hebel die größere Kraft aufgebracht wird.

Ist jedoch der eine Hebel 24 gezogen, würde ein Drücken des anderen Hebels 22 nicht möglich sein, da eine Blockierung dieses Hebels 22 durch den Hebel 24 erfolgt, indem Zähne entsprechend ineinandergreifen. Dies ist natürlich auch der Fall, wenn der Hebel 22 gezogen wird.

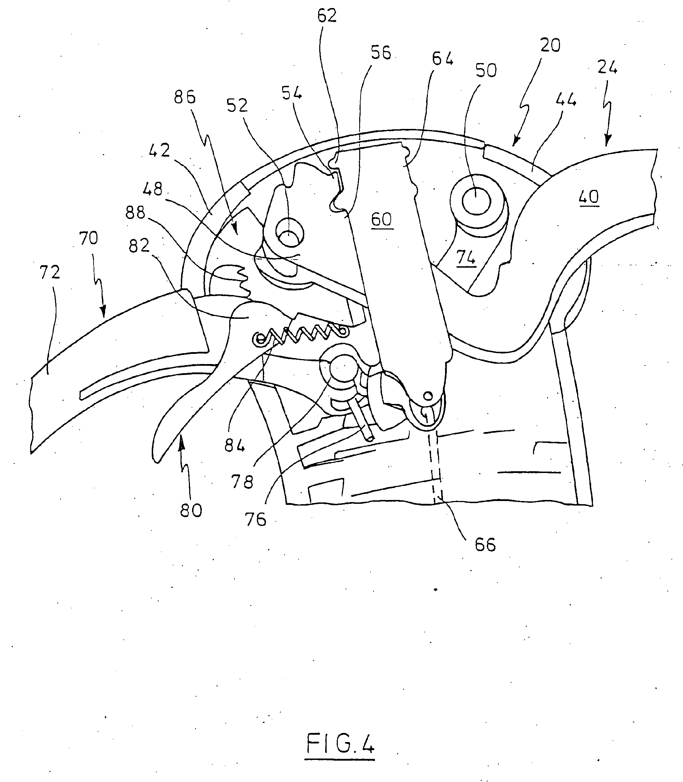

Die Darstellung nach Fig. 4 enthält die gleichen Bezugszeichen wie Fig. 3, soweit gleiche Teile wie in Fig. 3 dargestellt sind. Man erkennt, dass gegenüber Fig. 3 der zweite Bedienhebel 22 in Fortfall gekommen ist und stattdessen ein Bedienhebel 70 vorgesehen ist mit einem Betätigungsabschnitt 72 und einem inneren Abschnitt 74. Der innere Abschnitt 74 ist an der Lagerstelle 50 gelagert, an der bei der Ausführungsform nach Fig. 3 der Bedienhebel 22 schwenkbar gelagert ist. Das Gehäuse ist so ausgebildet, dass der Bedienhebel 22 ohne weiteres durch den Bedienhebel 70 und umgekehrt ersetzt werden kann. Der Betätigungsabschnitt 72 kann die gleiche geometrische Form aufweisen wie der Betätigungsabschnitt 38 nach Fig. 3, oder auch abweichend gestaltet sein bzw. eine andere Oberfläche oder Farbe tragen, damit der Bediener die Hebel 24 und 70 im Hinblick auf ihre Funktion unterscheiden kann.

Wie aus Fig. 4 ferner zu erkennen, ist ein Bremsseil 76 bei 78 in einen mittleren Abschnitt des Bedienhebels 70 eingehängt. Ein Ziehen am Bedienhebel 70 führt zur Betätigung der Bremse des nicht gezeigten Handgabelhubwagens. Das Bremsseil 76 wird vorzugsweise innerhalb der rohrförmigen Deichselstange geführt (nicht gezeigt).

Wie aus Fig. 4 ferner zu erkennen, erstrecken sich die inneren Abschnitte 48 bzw. 74 der Hebel 24, 70 durch das Verstellelement 60 hindurch, um sich dort zu überkreuzen. In Fig. 3 ist lediglich der untere Teil des Verstellelements 60 zu erkennen. Für die Funktion hat dies jedoch keine Bedeutung, mit Ausnahme der Tatsache, dass sich auch dort die Hebel 24, 70 überkreuzen, um eine möglichst große Hebelkraft erzeugen zu können.

Ein dritter Hebel, der als Sperr- und Entsperrhebel 80 wirkt, ist bei 82 auf dem Hebel 70 schwenkbar gelagert. Zu diesem Zweck ist der Hebel 70 in dem Lagerbereich in seiner Dicke reduziert, damit auch der Sperr- und Entsperrhebel 80 sich durch den Schlitz 42 des Gehäuses 20 hindurcherstrecken kann. Eine Feder 84 spannt den Hebel 80 entgegengesetzt der Uhrzeigerrichtung vor. Das andere Ende der Feder 84 ist am Hebel 70 festgelegt.

Innerhalb des Gehäuses ist ein plattenförmiger Sperrabschnitt 86 angeordnet, der eine Sägezahnung 88 aufweist. Er kann ausbaubar sein, falls eine Bremsbetätigung nicht gewünscht ist.

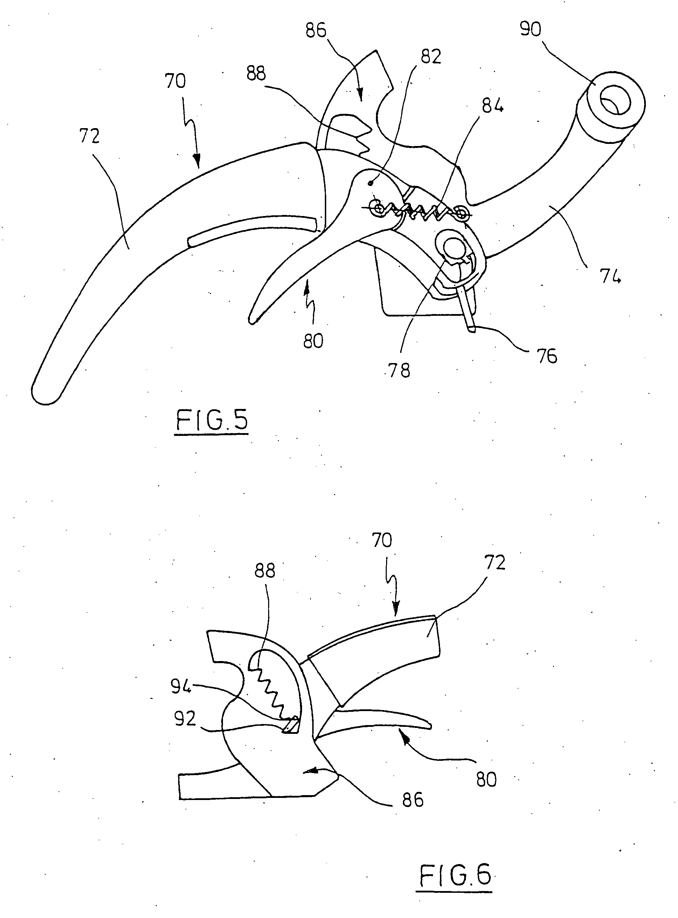

In Fig. 5 ist lediglich eine Lagerhülse 90 des inneren Abschnitts 74 des Hebels 70 angedeutet zur Anbringung am Lagerpunkt 50 gemäß Fig. 4.

Auf der gleichen Welle wie der Sperr- und Entsperrhebel 80 ist eine Sperrklinke 92 am Hebel 70 gelagert. Die Lagerachse ist bei 94 angedeutet. Aufgrund der Vorspannung des Sperr- und Entsperrhebels 80 wird die Sperrklinke 92 stets gegen die Zahnung 88 geschwenkt, sodass bei einem Ziehen am Bedienhebel 70 die Sperrklinke 92 der Zahnung 88 entlang ratscht und in diejenige Zahnlücke rastend eingreift, zu der die Sperrklinke 92 ausgerichtet ist, wenn die Schwenkbewegung des Hebels 70 beendet wird. Dadurch kann der Bedienhebel 70 in mehreren Positionen verrastet werden, um die eingestellte Bremskraft konstant zu halten. Die Verrastung wird gelöst, indem der Bediener den Sperr- und Entsperrhebel 80 betätigt und in Fig. 5 in Uhrzeigerrichtung verschwenkt. Dadurch wird die Sperrklinke 92 entgegengesetzt der Uhrzeigerrichtung verschwenkt und kommt mit der Zahnung 88 außer Eingriff.

Die Feder der Bremse kann den Bedienhebel 70 in die Ausgangsposition zurückverschwenken.

Im Gehäuse können geeignete Anschläge zur Begrenzung der Verstellung der Bedienhebel vorgesehen werden.

## Patentansprüche

1. Deichsel für Handgabelhubwagen, mit einer Deichselstange (10), die am unteren Ende an einem Halter für ein lenkbares Rad lankenkbar und am anderen Ende mit einem schleifenartigen Griff (14) verbunden ist, einer Bedienvorrichtung innerhalb des vom Griff umspannten Raums, die an einem in Verlängerung der Stange in den Griff hineinerstreckten Halteansatz (16) angebracht und über ein Zug- und/oder Druckelement mit einer Hubvorrichtung des Handgabelhubwagens und ggf. über ein zweites Zug- und/oder Druckelement mit einer Bremse des Handgabelhubwagens verbindbar ist, wobei auf jeder Seite des Halteansatzes ein Bedienhebel angeordnet ist, die im Wesentlichen in der vom Griff aufgespannten Ebene am Halteansatz schwenkbar gelagert sind, wobei die Bedienvorrichtung ein Gehäuse (20) aufweist, in dem eine erste und zweite Lagerstelle (50, 52) für jeweils einen Bedienhebel angeordnet ist, die jeweils mit einem Betätigungsabschnitt durch einen seitlichen Schlitz (42, 44) aus dem Gehäuse (20) hinausstehen, **dadurch gekennzeichnet, dass** die Lagerstellen (50, 52) gleich ausgebildet und vorzugsweise symmetrisch zur Achse des Halteansatzes angeordnet sind, dass an der ersten Lagerstelle (52) ein erster Bedienhebel (24) gelagert ist und an der zweiten Lagerstelle (50) wahlweise ein zweiter oder dritter Bedienhebel (70, 22) lagerbar ist, wobei der zweite Bedienhebel (70) für die Verbindung mit einem zweiten Zug- und/oder Druckelement (76) für die Bremse ausgebildet ist, dass erster und dritter Bedienhebel (24, 22) gleich ausgebildet sind und jeweils einen Koppelabschnitt aufweisen, dass im Gehäuse (20) ein mit dem ersten Zug- und/oder Druckelement verbundener Kopplungsmechanismus angeordnet ist, mit dem der Koppelabschnitt des ersten Bedienhebels (24) ständig in Eingriff ist und mit dem der Koppelabschnitt des dritten Bedienhebels (22) in Eingriff bringbar ist, wenn er an der zweiten Lagerstelle gelagert wird und dass schließlich im Gehäuse (20) eine Sperrvorrichtung für den zweiten Bedienhebel (70) vorgesehen ist, die von einem Sperr- und Entsperrhebel (80) betätigbar ist, der an einer dritten Lagerstelle (82) gelagert ist und sich zur selben Seite erstreckt wie der zweite oder dritte Bedienhebel (70, 24).

2. Deichsel nach Anspruch 1, **dadurch gekennzeichnet, dass** erster und dritter Bedienhebel (24, 22) über den Kopplungsmechanismus derart verknüpft sind, dass ein Ziehen an dem ersten oder dritten Bedienhebel (24, 22) oder an beiden aus einer Neutralstellung heraus und der Deichselstange fort einen Senkvorgang bewirkt und ein Drücken eines einzelnen Bedienhebels (24, 22) aus der Neutralstellung heraus auf die Deichselstange zu einen Hebevorgang der Hubvorrichtung ermöglicht.

3. Deichsel nach Anspruch 1 oder 2, **dadurch gekennzeichnet, dass** im Gehäuse (20) ein eine Zahnung (88) aufweisender Sperrabschnitt (86) angeordnet ist, mit der eine Sperrklinke (92) so zusammenwirkt, dass beim Ziehen des zweiten Bedienhebels (70) die Sperrklinke (92) der Zahnung (88) entlang ratscht und nach Beendigung der Bewegung des zweiten Bedienhebels (70) in eine der Zahnlücken eingreift und der Sperr- und Entsperrhebel (80) mit der Sperrklinke (92) gekoppelt ist, um diese mit der Zahnung (88) außer Eingriff zu bringen.

4. Deichsel nach Anspruch 3, **dadurch gekennzeichnet, dass** die Sperrklinke (92) oder der Sperr- und Entsperrhebel (80) von einer Feder (84) vorgespannt ist.

5. Deichsel nach Anspruch 3 oder 4, **dadurch gekennzeichnet, dass** Sperrklinke (92) und Sperr- und Entsperrhebel (80) auf einer gemeinsamen Welle am zweiten Bedienhebel (70) gelagert sind.

6. Deichsel nach einem der Ansprüche 1 bis 4, **dadurch gekennzeichnet, dass** erster, zweiter und/oder dritter Bedienhebel (24, 70, 22) die gleiche geometrische Form aufweisen.

7. Deichsel nach einem der Ansprüche 1 bis 6, **dadurch gekennzeichnet, dass** der Betätigungsabschnitt (72) des zweiten Bedienhebels (70) aus einem anderen Material besteht und/oder eine andere Oberfläche und/oder eine andere Farbe aufweist oder eine andere Form hat als der des ersten oder dritten Bedienhebels (24, 22).

8. Deichsel nach einem der Ansprüche 1 bis 7, **dadurch gekennzeichnet, dass** der Kopplungsmechanismus so ausgelegt ist, dass ein Bedienhebel (22, 24) in der Neutralstellung verbleibt, wenn der andere gezogen wird.

9. Deichsel nach einem der Ansprüche 1 bis 8, **dadurch gekennzeichnet, dass** der Kopplungsmechanismus so ausgeführt ist, dass bei Verstellung des Bedienhebels in Druckrichtung und in die Neutralstellung zurück diese synchron bewegt werden.

10. Deichsel nach einem der Ansprüche 1 bis 9, **dadurch gekennzeichnet, dass** der Kopplungsmechanismus ein Verstellelement (80) aufweist, das linear im Gehäuse (20) bewegbar ist und einen Zahnstangenabschnitt (58) aufweist mit einer Zahnung (64, 62) auf gegenüberliegenden Seiten und erster und dritter Bedienhebel (24, 22) jeweils einen gezahnten Abschnitt aufweisen, der mit jeweils einer Zahnung des Zahnstangenabschnitts zusammenwirkt.

11. Deichsel nach Anspruch 10, **dadurch gekennzeichnet, dass** die inneren Endabschnitte (48, 74, 46) der jeweiligen Bedienhebel (24, 70, 22) sich im Gehäuse (20) kreuzen und ihre Lagerstelle (48, 50) jeweils auf der gegenüberliegenden Seite des Verstellelements (60) angeordnet ist.

12. Deichsel nach einem der Ansprüche 1 bis 11, **dadurch gekennzeichnet, dass** das Gehäuse (20) aus zwei Schalen (32, 34) gebildet ist, deren Trennebene in der oder parallel zur Schwenkebene der Bedienhebel (24, 70, 22) liegt.

13. Deichsel nach Anspruch 12, **dadurch gekennzeichnet, dass** die Gehäuseschalen einen Muffenabschnitt aufweisen, in den ein Rohrabschnitt des Halteansatzes einsteckbar ist.

14. Deichsel für Handgabelhubwagen, mit einer Deichselstange (10), die am unteren Ende an einem Halter für ein lenkbares Rad anlenkbar und am anderen Ende mit einem schleifenartigen Griff (14) verbunden ist, einer ein Gehäuse (20) aufweisenden Bedienvorrichtung innerhalb des vom Griff umspannten Raums, die an einem in Verlängerung der Stange in den Griff hineinerstreckten Halteansatz (16) angebracht ist, wobei auf jeder Seite des Halteansatzes ein Bedienhebel (24,70) angeordnet ist, die im Wesentlichen in der vom Griff aufgespannten Ebene am Halteansatz schwenkbar gelagert sind, wobei ein Bedienhebel (24) auf ein mit einer Hubvorrichtung des Handgabelhubwagens verbindbares Zug- oder Druckelement einwirkt und der zweite Bedienhebel (70) auf ein zweites mit einer Bremse des Handgabelhubwagens verbundenes Zug- oder Druckelement zusammenwirkt und ein in der Bedienvorrichtung schwenkbar gelagerter Sperr- und/oder Entsperrhebel (80), der in einer ersten Position des zweiten Bedienhebels diesen sperrt und in einer zweiten Position den zweiten Bedienhebel freigibt, **dadurch gekennzeichnet, dass** der Griff am hinteren Ende auch mittig ergreifbar ist, und dass innerhalb des Gehäuses (20) für die Bedienvorrichtung am zweiten Bedienhebel (70) eine Sperrklinke (92) beweglich gelagert ist, die mit einer Zahnung (88) an einem Sperrabschnitt (86) im Gehäuse (20) zusammenwirkt, um den zweiten Bedienhebel (70) in vorgegebenen Schwenkstellungen zu verriegeln, der Sperr- und Entsperrhebel innerhalb des Gehäuses schwenkbar gelagert und mit der Sperrklinke (92) gekoppelt ist und die Sperrklinke (92) oder der Sperr- und/oder Entsperrhebel (80) von einer Feder (84) vorgespannt ist.

## Claims

1. A pole for a hand pallet truck comprising:
a pole bar (10) which is linked to a support for a steerable wheel at its lower end and connected to a loop-shaped handle (14) at the other end,
an operating device within the space defined by the handle, the operating device being attached to a holding extension (16) projecting into the handle in prolongation of the bar, and being connectable to a lifting apparatus of the hand pallet truck via a traction and/or pushing element, and, if applicable, being connectable via a second traction and/or pushing element to a brake of the hand pallet truck,
wherein an operating lever is disposed on either side of the extension, the operating levers being pivotally mounted on the holding extension in a plane essentially defined by the handle,
wherein the operating device has a housing (20), in which first and second mounting places (50, 52) are disposed, one for each operating lever, each operating levers projecting through a slot (42, 44) in the side of the housing (20) with an actuating portion, **characterized in that** the mounting places (50, 52) are identically constructed and preferably arranged symmetrically to the axis of the holding extension, **in that** a first operating lever (24) is mounted at the first mounting place (52) and optionally a second or a third operating lever (70, 22) is mountable at the second mounting place (50), wherein the second operating lever (70) is adapted for connection with the second traction and/or pushing element (76) for the brake, **in that** the first and third operating levers (24, 22) are shaped identically and have a coupling portion each, **in that** a coupling mechanism connected to the first traction and/or pushing element is disposed inside the housing (20), wherein the coupling mechanism is constantly engaging the coupling portion of the first operating lever (24) and is able to engage the coupling portion of the third operating lever (22) when it is mounted at the second mounting place, and finally **in that** inside the housing (20) is provided a locking device for the second operating lever (70), wherein the locking device may be actuated from a locking and unlocking lever (80) mounted at a third mounting place (82) and extending to the same side as the second or third operating lever (70, 24).

2. The pole of claim 1, wherein the first and third operating levers (24, 22) are coupled by the coupling mechanism such that pulling the first or third operating lever (24, 22) or both out of a neutral position and away from the pole bar causes a lowering operation and pushing a single operating lever (24, 22) out of the neutral position towards the pole bar allows a lifting operation of the lifting apparatus.

3. The pole of claim 1 or 2, wherein an interlock portion (86) having a toothing (88) is disposed in the housing (20) and a catch (92) is cooperating with the toothing such that when pulling the second operating lever (70), the catch (92) ratchets along the toothing (88) and, when the second operating lever (70) has finished moving, engages one of the tooth spaces, and the locking and unlocking lever (80) is coupled to the catch (92) to disengage it from the toothing (88).

4. The pole of claim 3, wherein the catch (92) or the locking and unlocking lever (80) is biassed by a spring (84).

5. The pole of claim 3 or 4, wherein the catch (92) and the locking and unlocking lever (80) are mounted on a common shaft on the second operating lever (70).

6. The pole according to one of the claims 1 to 4, wherein the first, second and/or third operating levers (24, 70, 22) have the same geometric shape.

7. The pole according to one of the claims 1 to 6, wherein the actuating portion (72) of the second operating lever (70) is made from a different material and/or has a different surface and/or a different colour or has a different shape than the first or third operating levers (24, 22).

8. The pole according to one of the claims 1 to 7, wherein the coupling mechanism is constructed such that an operating lever (22, 24) remains in the neutral position when the other one is being pulled.

9. The pole according to one of the claims 1 to 8, wherein the coupling mechanism is constructed such that when shifting the operating lever in pushing direction and back to the neutral position, the operating levers are moved synchronously.

10. The pole according to one of the claims 1 to 9, wherein the coupling mechanism includes a shifting element (80) which is linearly movable inside the housing (20) and has a tooth rack portion (58) with a toothing (64, 62) on opposing side and wherein the first and third operating levers (24, 22) each have a toothed portion engaging with one toothing of the tooth rack portion each.

11. The pole of claim 10, wherein the inner end portions (48, 74, 46) of the operating levers (24, 70, 22) cross each other inside the housing (20) and their mounting place (48, 50) is disposed on the respective opposite side of the shifting element (60).

12. The pole of according to one of the claims 1 to 11, wherein the housing (20) is made up of two shells (32, 34), the dividing plane of which is disposed in or parallel to the pivotal plane of the operating levers (24, 70, 22).

13. The pole of claim 12, wherein the housing shells have a socket portion which is capable of receiving a tube portion of the holding extension.

14. A pole for a hand pallet truck comprising:
a pole bar (10) which is linked to a support for a steerable wheel at its lower end and connected to a loop-shaped handle (14) at the other end,
an operating device having a housing (20) within the space defined by the handle, the operating device being attached to a holding extension projecting into the handle in prolongation of the bar,
wherein an operating lever (24,70) is disposed on either side of the extension, the operating levers being pivotally mounted on the holding extension (16) in a plane essentially defined by the handle, wherein one operating lever (24) acts on a traction or pushing element connectable to a lifting apparatus of the hand pallet truck and the second operating lever (70) acts on a second traction or pushing element connected to the brake of the hand pallet truck and a locking and/or unlocking lever (80) pivotally mounted inside the operating device which in a first position of the second operating lever locks the same and in a second position unlocks the second operating lever,
**characterized in that** the handle at the lower end is also coaxial tangible, that a catch (92) is movably mounted on the second operating lever (70) inside the housing (20) for the operating device, the catch cooperating with a toothing (88) in an interlock portion (86) in the housing (20) to lock the second operating lever (70) in given pivotal positions, **in that** the locking and unlocking lever is titlably mounted inside the housing and coupled to the catch (92) and the catch (92) or the locking and/or unlocking lever (80) are biassed by a spring (84).

## Revendications

1. Timon pour chariot élévateur à fourche manuel, comprenant une tige de timon (10) qui est reliée, à son extrémité inférieure, à une monture pour une roue orientable et, à son autre extrémité, à une poignée en forme de boucle (14), un dispositif de commande placé dans l'espace entouré par la poignée, qui est fixé à un embout de support (16) engagé dans la poignée dans le prolongement de la tige, et qui peut être relié à un dispositif élévateur du chariot élévateur à fourche manuel par l'intermédiaire d'un élément de traction et/ou de pression et, éventuellement, à un frein du chariot élévateur à fourche manuel par l'intermédiaire d'un deuxième élément de traction et/ou de pression, dans lequel, sur chaque côté de l'embout de montage, est disposé un levier de commande qui est monté sur l'embout de montage avec possibilité de pivoter sensiblement dans le plan sous-tendu par la poignée, le dispositif de commande présentant un boîtier (20) dans lequel sont disposés des premier et deuxième points d'articulation (50, 52), chacun pour un levier de commande qui émerge du boîtier (20) à travers une fente latérale (42, 44) par un segment d'actionnement respectif, **caractérisé en ce que** les points d'articulation (50, 52) sont de même configuration et disposés de préférence symétriquement par rapport à l'axe de l'embout de support, **en ce qu'**un premier levier de commande (24) est monté rotatif sur le premier point d'articulation (52) et un second ou facultativement un troisième levier de commande (70, 22) peut être monté rotatif sur la deuxième point d'articulation (50), le deuxième levier de commande (70) est configuré pour être relié à un deuxième élément de traction et/ou de pression (76) pour le frein, **en ce que** les premier et troisième leviers de commande (24, 22) sont de même configuration et présentent chacun un segment d'accouplement, **en ce que**, dans le boîtier (20), est disposé un mécanisme d'accouplement relié au premier élément de traction et/ou de pression avec lequel le segment d'accouplement du premier levier de commande (24) est en prise en permanence, et avec lequel le segment d'accouplement du troisième levier de commande (22) peut être mis en prise lorsqu'on le monte sur la deuxième point d'articulation, et **en ce que**, finalement, il est prévu dans le boîtier (20) un dispositif de verrouillage destiné au deuxième levier de commande (70), qui peut être actionné par un levier de verrouillage et de déverrouillage (80) qui est monté rotatif sur une troisième point d'articulation (82) et qui s'étend vers le même côté que le deuxième ou le troisième levier de commande (70, 24).

2. Timon selon la revendication 1, **caractérisé en ce que** des premier et troisième leviers de commande (24, 22) sont interconnectés par l'intermédiaire du mécanisme d'accouplement de telle manière qu'une traction exercée sur le premier ou le troisième levier de commande (24, 22) ou sur les deux, à partir d'une position neutre et en s'éloignant de la tige du timon, provoque une opération d'abaissement et qu'une pression sur un seul levier de commande (24, 22) en partant de la position neutre et en direction de la tige du timon permet une opération d'élévation du dispositif élévateur.

3. Timon selon la revendication 1 ou 2, **caractérisé en ce que**, dans le boîtier (20) est disposé un segment de verrouillage (86) présentant une denture (88), avec laquelle un cliquet de verrouillage (92) coopère de telle manière que, lorsqu'on tire le deuxième levier de commande (70), le cliquet de verrouillage (92) cliquette le long de la denture (88) et, après l'interruption du mouvement du deuxième levier de commande (90), s'engage dans l'un des creux de denture, et le levier de verrouillage et de déverrouillage (80) est accouplé au cliquet de blocage (92) pour placer ce dernier hors de prise avec la denture (88).

4. Timon selon la revendication 3, **caractérisé en ce que** le cliquet de blocage (92) ou le levier de verrouillage et de déverrouillage (80) est ou sont rappelés par un ressort (84).

5. Timon selon la revendication 2 ou 4, **caractérisé en ce que** le cliquet de verrouillage (92) et le levier de verrouillage et/ou de déverrouillage (80) sont montés rotatifs sur un arbre commun porté par le deuxième levier de commande (70).

6. Timon selon la revendication 1 à 4, **caractérisé en ce que** les premier, deuxième et/ou troisième leviers de commande (24, 70, 22) présentent la même forme géométrique.

7. Timon selon une des revendications 1 à 6, **caractérisé en ce que** le segment d'actionnement (72) du deuxième levier de commande (70) est fait d'une matière différente et/ou présente une surface différente et/ou une couleur différente, ou encore une forme différente de celle du premier ou du troisième levier de commande (24, 22).

8. Timon selon une des revendications 1 à 7 , **caractérisé en ce que** le mécanisme d'accouplement est configuré de manière qu'un levier de commande (22, 24) reste dans la position neutre lorsqu'on tire l'autre.

9. Timon selon l'une des revendications 1 à 8, **caractérisé en ce que** le mécanisme d'accouplement est réalisé de telle manière que, lorsqu'on déplace le levier de commande dans le sens de la pression et qu'on le ramène à la position neutre, ces leviers sont déplacés en synchronisme.

10. Timon selon une des revendications 1 à 9, **caractérisé en ce que** le mécanisme d'accouplement présente un élément de réglage (80) qui peut se déplacer linéairement dans le boîtier (20) et qui présente un segment formant crémaillère (58) possédant une denture (64, 62) sur deux côtés opposés, et les premier et troisième leviers de commande (24, 22) présentent chacun un segment denté qui coopère avec une denture respective du segment formant crémaillère.

11. Timon selon la revendication 10, **caractérisé en ce que** les segment terminaux intérieurs (48, 74, 46) des leviers de commande respectifs (24, 70, 22) se croisent dans le boîtier (20) et leurs points d'articulation respectifs (48, 50) sont disposés chacun de l'autre côté de l'élément de réglage (60).

12. Timon selon une des revendications 1 à 11, **caractérisé en ce que** le boîtier (20) est formé de deux coquilles (32, 34) dont le plan de joint se trouve dans le plan de pivotement des leviers de commande (24, 70, 22) ou parallèlement à ce plan.

13. Timon selon la revendication 12, **caractérisé en ce que** les coquilles du boîtier présentent un segment formant emboîture dans lequel un segment tubulaire de l'embout de montage peut s'emboîter

14. Timon pour un chariot élévateur à fourche manuel comprenant une tige de timon (10) qui est reliée, à son extrémité inférieure, à une monture pour une roue orientable et, à son autre extrémité, à une poignée (14) en forme de boucle, un dispositif de commande présentant un boîtier (20), qui est placé dans l'espace entouré par la poignée et qui est monté sur un embout de support (16) engagé dans la poignée dans le prolongement de la tige, dans lequel, de chaque côté de l'embout de support, est disposé un levier de commande (24, 70), ces leviers étant montés rotatifs sur l'embout de support sensiblement dans le plan sous-tendu par la poignée, un levier de commande (24) agissant sur un élément de traction ou de pression qui peut être relié à un dispositif élévateur du chariot élévateur à fourche manuel, et le deuxième levier de commande (70) coopérant avec un deuxième élément de traction ou de pression relié à un frein du chariot élévateur à fourche manuel, et un levier de verrouillage et/ou de déverrouillage (80) monté pivotant dans le dispositif de commande et qui , dans une première position du deuxième levier de commande, verrouille celui-ci et, dans une deuxième position, libère le deuxième levier de commande, **caractérisé en ce que** la poignée peut aussi être saisie en son milieu à son extrémité arrière, qu'à l'intérieur du boîtier (20) utilisé pour le dispositif de manoeuvre, est monté mobile sur le deuxième levier de commande (70) un cliquet de verrouillage (92) qui coopère avec une denture (88) prévue sur un segment de verrouillage (86) à l'intérieur de boîtier (20) pour verrouiller le deuxième levier de commande (70) dans des positions de pivotement prédéterminées, que le levier de verrouillage et de déverrouillage est monté pivotant à l'intérieur du boîtier et est accouplé au levier de verrouillage (92) et que le cliquet de verrouillage (92) ou le levier de verrouillage et/ou de déverrouillage (80) est ou sont rappelés par un ressort (84).
